# EUROPEAN PATENT SPECIFICATION

(11) **EP 1 279 914 B1**
(45) Date of publication and mention of the grant of the patent: **07.11.2007**
(21) Application number: 01117639.3
(22) Date of filing: 24.07.2001
(51) Int. Cl.: F27D 13/00, C21C 5/56

(54) **Method for preparing scrap iron to be fed to steelmaking electric furnaces, and apparatus for carrying out the method**
Verfahren zur Vorbereitung von im Elektroofen zuzuführenden Eisenschrott und Vorrichtung zur Durchführung des Verfahrens
Procédé de préparation de ferrailles avant de les transférer dans un four électrique et dispositif pour la mise en oeuvre d une préparation

(43) Date of publication of application: 29.01.2003
(73) Proprietor: ELTI S.r.l., 24060 Sovere (Bergamo) (IT)
(72) Inventor: Macario, Federico, 24065 Lovere (Bergamo) (IT); Schliephake, Henning, 2830 Courrendlin (CH)
(74) Representative: Modiano, Micaela Nadia

(56) References cited:
- EP-A- 0 523 858
- EP-A- 0 871 004
- DE-A- 3 243 128
- PATENT ABSTRACTS OF JAPAN vol. 1997, no. 09, 30 September 1997 (1997-09-30) & JP 09 133476 A (ISHIKAWAJIMA HARIMA HEAVY IND CO LTD), 20 May 1997 (1997-05-20)

## Description

The present invention relates to a method for preparing scrap iron to be fed to steelmaking electric furnaces and to an apparatus for carrying out the method.

It is known that the conventional steelmaking method which uses electric furnaces consists in charging the furnace, in one or more steps, with scrap iron and in melting it by heat energy generated by the electric arc produced by the electrodes.

This conventional technique is the source of considerable problems.

In fact, raising the scrap from ambient temperature to the melting temperature in short times, owing to the need to increase the productivity of the furnace, by using almost exclusively electric power entails the use of extremely high electric power levels which are used discontinuously, with considerable costs and with problems as regards the supply of such electric power.

In order to reduce the problems linked to the discontinuous management of high electric power levels, considerable investments are necessary, for example to adopt static compensators in order to contain the problem of so-called flicker, however with scarce results.

Another problem is constituted by the very high noise levels, mainly due to the difference between the temperature of the electric arc and the temperature of the scrap when its heating begins. In order to reduce noise emission, it is necessary to provide huge structures, with consequent considerable investments.

Another problem is constituted by the polluting emissions, which must be contained by resorting to huge flue gas aspiration systems in order to follow the discontinuous production cycle step by step.

In order to eliminate or at least reduce these problems, innovative production processes and apparatuses have been proposed in recent years which have the main goal of reducing the amount of electric power that is used by resorting to chemical energy and/or to the utilization of the energy of the gases in order to preheat the scrap introduced in the furnace.

One of the most interesting innovative processes is unquestionably the production process that consists in continuously charging the electric furnace with scrap which is gradually heated by using both the flue gas produced by the furnace and the thermal energy produced by burners.

This process, which achieves the goal of producing steel with a continuous cycle, has unquestionably reduced considerably the problems that arise from discontinuous operation of the electric furnace and the problems linked to noise, but has left the problems related to polluting emissions practically unsolved.

Moreover, since this is a process which requires an entirely innovative apparatus for its execution, it also requires large investments and can be adopted only in new production units as an alternative to existing ones.

Another innovative process is disclosed in EP-268606.

This process substantially consists in preheating the scrap, contained in charging baskets, by using the flue gas of the furnace or the gases generated by means of a burner inside a reheating chamber. The unburned gases released by the scrap upon its preheating are returned to the reheating chamber in order to be burned completely before being sent to a gas scrubbing unit which discharges them into the atmosphere.

With respect to the other innovative processes, this process achieves additional advantages such as a significant reduction in polluting emissions and the possibility to use it even in conventional production apparatuses by committing relatively modest investments.

However, this new process has the drawback that it does not use much of the energy produced by the burner of the reheating chamber. A considerable fraction of this energy is in fact lost in treating the gases in the gas scrubbing unit, where such gases are cooled rapidly.

Moreover, reheating performed with a conventional burner has a low efficiency.

EP-A-0871004 discloses a gas recirculating furnace including an out-of-furnace circulating path for tasking combustion gas in the inner space of the furnace to the outside of the furnace and flowing it back to the inside of the furnace from a different position. At opposite ends of the furnace there are provided a pair of heating chambers each provided with a respective regenerative burner, and flow switching means are provided for inverting a flow direction of the gas current in the furnace.

The aim of the present invention is to solve the above-mentioned problems, by providing a method for preparing scrap iron to be fed to steelmaking electric furnaces which allows to preheat the scrap and remove pollutants therefrom very efficiently, thus reducing production costs and maintaining the atmospheric emissions of the steel production apparatus within the limits prescribed by atmospheric pollution standards.

Within this aim, an object of the invention is to provide a method which can be performed, with relatively small investments, both in new production and in existing apparatuses.

Another object of the invention is to provide a method which significantly reduces the amount of electric power required for the operation of the furnace.

Another object of the invention is to provide a method which also allows to reduce the noise emitted by the furnace during its operation, thus also reducing the investments required in order to reduce the noise pollution of the steel production apparatus.

Another object of the invention is to provide an apparatus for carrying out the method according to the invention which is structurally simple and requires relatively modest investments.

In accordance with the invention, there is provided a method and an apparatus for preparing scrap iron to be fed to steelmaking electric furnaces, as defined in the appended claims.

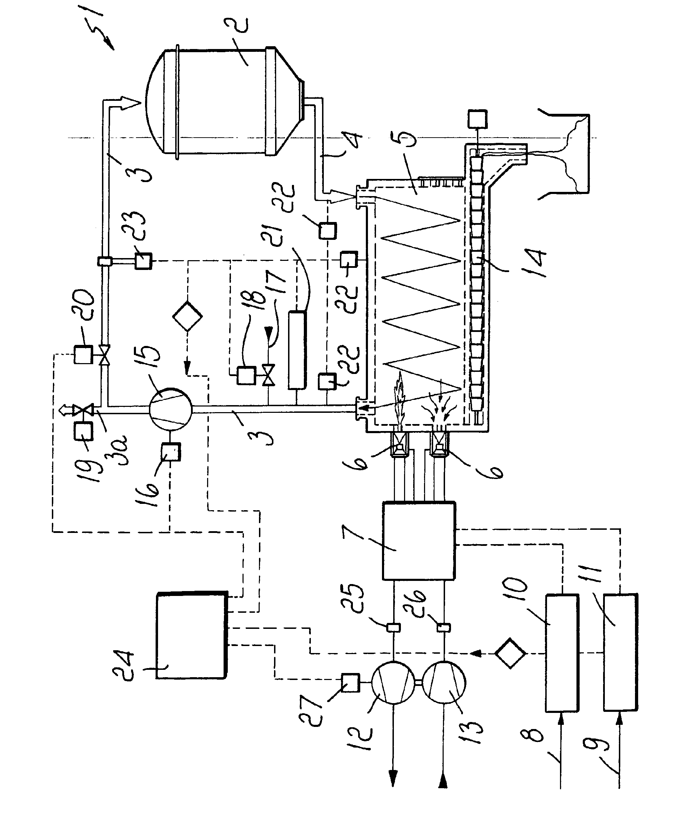

Further characteristics and advantages of the invention will become better apparent from the description of a preferred but not exclusive embodiment of the method according to the invention and of the apparatus for carrying out it, illustrated only by way of non-limitative example in the accompanying drawings, wherein the only figure is a schematic view of the apparatus for carrying out the method according to the invention.

With reference to the figure, the apparatus for carrying out the method according to the invention, generally designated by the reference numeral 1, is completely independent of the apparatus for disposal of the flue gas of the steelmaking furnace that it is designed to serve. The apparatus according to the invention comprises at least one container 2 for the scrap to be fed to the steelmaking furnace. The apparatus comprises a duct 3 for conveying gases at a preset temperature into the container 2, and a discharge duct 4 which collects the gases after they have passed through the scrap placed in the container 2 and the gaseous products released from the scrap owing to its heating performed by the gases.

The duct 4 is connected to a reheating chamber 5, in which regenerative burners 6 are arranged in order to maintain a preset temperature inside the reheating chamber 2.

The duct 3 can be connected to a combustion chamber or to a gas generation chamber, in which the gases to be conveyed to the container 2 are produced and which is separate from the reheating chamber 5; however, the duct 3 is preferably connected to said reheating chamber 5 so as to use, in order to preheat the scrap placed in the container 2, the same gases produced in the reheating chamber 5. Substantially, the chamber for generating the gases to be used to preheat the scrap and the reheating chamber 5 are preferably constituted by a same chamber.

The reheating chamber 5 is served by at least two regenerative burners 6, which are operated alternately so that while one is activated the other one aspirates gases from the reheating chamber 5. This produces, inside the reheating chamber 5, an intense turbulence which ensures excellent temperature uniformity and achieves maximum efficiency in heating the gases that pass through the reheating chamber 5.

The regenerative burners 6, which are preferably constituted by high-efficiency burners, for example of the type disclosed in Italian patent no. 1,301,583, are supplied by means of a fuel-air distribution unit 7 which is connected to a duct 8 for fuel supply and a duct 9 for pressurized air supply with corresponding controllable valves 10 and 11.

The distribution unit 7 is further connected to an exhauster 12, which aspirates the gases from the reheating chamber 5 through the thermal accumulation material of the regenerative burners 6, and to an electric fan 13, which supplies comburent air to the regenerative burners through said thermal accumulation material in order to achieve preheating of the comburent air at the expense of the heat removed earlier from the gases extracted from the reheating chamber 5.

On the bottom of the reheating chamber 5 there is an electromechanical scroll (14) for extracting and removing the dust released by the gases from the reheating chamber 5.

Along the duct 3 there is an exhauster 15 for circulation of the gases along the circuit constituted by the reheating chamber 5, the duct 3, the container 2 and the duct 4.

The exhauster 15 is preferably actuated by means of a variable-speed motor 16 in order to vary, according to requirements and particularly according to the intended retention time of the gases inside the reheating chamber 5, the flow-rate of the gases along said circuit.

Between the reheating chamber 5 and the exhauster 15, along the duct 3, there can be an air intake duct 17 which is controlled by a controllable valve 18 in order to safeguard the integrity of the exhauster 15 by lowering the temperature of the gases if it is too high by supplying cold air through the duct 17.

The duct 3 has, between the exhauster 15 and the container 2, a branch 3a which is controlled by a controllable valve, and downstream of said branch 3a the duct 3 is controlled by another controllable valve 20. Through the valves 19 and 20 it is possible, when required, to interrupt the circulation of the gases between the reheating chamber 5 and the container 2 and partially or fully discharge said gases into the atmosphere.

Conveniently, along the duct 3, in output from the reheating chamber 5, there is a gas analyzer 21.

Moreover, temperature sensing devices 22 are provided in the reheating chamber 5, along the duct 3 and along the duct 4.

A device 23 for measuring the flow-rate of the gases that flow in the duct 3 is further arranged along the duct 3.

The temperature sensors 22, the flow-rate measurement device 23 and the gas analyzer 21 are connected to a control and monitoring unit 24 of the electronic type which supervises the operation of the entire apparatus according to preset programs.

Flow-rate measurement devices 25 and 26 are provided also along the gas extraction duct and along the comburent air supply duct, on which the exhauster 12 and the electric fan 13 used by the regenerative burners 6 are arranged; such measurement devices are also connected to the control and monitoring unit 24.

The control and monitoring unit 24 is operatively connected to the motor 16 that drives the exhauster 15, to the motor 27 that drives the exhauster 12 and the electric fan 13, to the valves 10 and 11 that control the supply of fuel and comburent air to the burners 6, and to the controllable valves 18, 19 and 20.

The control and monitoring unit 24, according to preset programs and according to the measurements of the parameters of the gases along the apparatus, ensures the correct operation of the apparatus and particularly ensures that a preset temperature, preferably between 1100 and 1200 °C, is maintained inside the reheating chamber 5, ensures that the gases remain inside the reheating chamber 5 for a preset time, preferably 1.5 seconds or more, and ensures that the scrap placed in the container 2 is heated by gases which have a preset temperature, preferably between 1000 and 1100 °C.

The apparatus 1 can also be installed in a region of the steelworks that is distant from the melting furnace, for example close to the scrap storage area.

The operation of the apparatus in carrying out the method according to the invention is as follows.

The hot gases, which preferably arrive from the reheating chamber 5 itself, at a temperature which is preferably between 1000 and 1100 °C, flow through the scrap iron placed in the container 2 and heat it. At this temperature, the pollutants contained in the scrap, such as plastics, rubbers, and oils, become gaseous in the form of chlorated aromatic hydrocarbons and dioxins, and are included in the gases that enter the reheating chamber 5 through the duct 4.

In the reheating chamber 5, the temperature of the fumes or gases that arrive from the scrap is increased to a temperature preferably between 1100 and 1200 °C and transit time of the gases through the reheating chamber 5 is at least equal to 1.5 seconds. The intense turbulence ensured by the regenerative burners 6 allows to obtain an excellent temperature uniformity inside the reheating chamber 5.

Said high temperature and dwell time ensure breakdown of the pollutants removed from the scrap until at the output of the reheating chamber 5 said substances are reduced below the levels set by standards against atmospheric pollution.

A fraction of the gases is extracted from the reheating chamber 5 through the regenerative burners 6 and transfers heat to the thermal accumulation material of said burners. This heat transfer achieves a rapid cooling of the gases which avoids recomposition of the pollutants. For this reason, the gases extracted from the reheating chamber 5 through the regenerative burners can be discharged into the atmosphere without further treatment.

It should be noted that the combustible pollutants extracted from the scrap by means of the gases burn in the reheating chamber 5, thus cooperating with the burners 6 in raising the temperature inside said chamber, and also reducing the amount of fuel to be fed to the burners 6.

The gases that leave the reheating chamber 5, through the duct 3, are conveyed again through the scrap contained in the container 2 until the intended scrap preheating temperature is reached.

The scrap, which is preferably heated to a temperature of approximately 800-1000 °C and is freed of its pollutants, is then conveyed, preferably by means of the same container 2, into the electric furnace.

Thereby, the electric power required to achieve scrap melting is reduced considerably and the operation of the furnace is truly environment-friendly. Moreover, the high temperature of the scrap introduced in the furnace achieves improved ionization of the electric arc generated by the electrodes, with consequent reductions in voltage fluctuations and flicker, with advantages also for the electric power supply network.

Preheating of the scrap as performed with the method according to the invention eliminates the need to perform preheating in the furnace by means of additional burners, thus simplifying the structure, the operation and the maintenance of the furnace.

The noise emissions of the furnace during melting are also reduced, eliminating or in any case reducing the size of the investment required to provide structures aimed at reducing said noise emissions.

Another advantage of the method according to the invention is that it does not require expensive gas scrubbing units or dust elimination units.

If increasing the productivity of the furnace is sought, one can provide multiple apparatuses according to the invention which sequentially heat the scrap and feed it to the furnace.

The method according to the invention and the apparatus for carrying out it, owing to the fact that they do not entail significant modifications to the conventional electric furnace, can be adopted both in new production units and in already-operating production units.

Moreover, the apparatus for carrying out the method according to the invention entails investments which are distinctly smaller than those required by innovative apparatuses that provide heating with continuous feeding of the scrap or in any case an in-line preheating which directly affects the operation of the electric furnace.

In practice it has been observed that the method according to the invention fully achieves the intended aim, since it allows to reduce significantly the production costs of steel, maintaining atmospheric emissions within the limits prescribed by atmospheric pollution standards.

The method according to the invention and the apparatus for carrying out it as conceived above are susceptible of numerous modifications and variations, all of which are within the scope of the appended claims.

In practice, the materials used, as well as the dimensions, may be any according to requirements and to the state of the art.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A method for preparing scrap iron to be fed to steelmaking electric furnaces, comprising the steps of :
producing, separately from the flue gas disposal system of the steelmaking furnace, hot gases in a gas generation chamber;
conveying said hot gases so that they flow through the scrap to be fed to the steelmaking furnace in order to preheat the scrap;
conveying the gases used to preheat the scrap into a reheating chamber which is kept at a controlled temperature substantially between 1100 and 1200 °C by means of at least two regenerative burners both serving the reheating chamber and operating alternately by means of a fuel-air distribution unit so that while one burner is activated the other burner aspirates gases from the reheating chamber;
retaining said gases in said reheating chamber for a preset time of at least 1.5 seconds before they are returned to preheat the scrap or discharged into the atmosphere; and
extracting and removing dust from said reheating chamber.

2. The method according to claim 1, **characterized in that** said gas generation chamber and said reheating chamber are constituted by a same chamber.

3. The method according to one or more of the preceding claims, **characterized in that** the scrap is preheated by means of said gases to a temperature substantially between 1000 and 1100 °C.

4. The method according to one or more of the preceding claims, **characterized in that** a fraction of the gases contained in said reheating chamber is used to heat the thermal accumulation material of the regenerative burners for preheating the comburent air fed to the regenerative burners.

5. The method according to one or more of the preceding claims, **characterized in that** the scrap to be preheated is arranged in at least one basket through which said gases flow.

6. An apparatus for preparing scrap iron to be fed to steelmaking electric furnaces, arranged separately from the apparatus for disposal of the flue gas of the steelmaking furnace and comprising a hot gas generation chamber which is connected, by way of a gas conveyance intake duct (3), to a container (2) for the scrap to be fed to the steelmaking furnace, said container (2) being in turn connected by way of a gas discharge duct (4) to a reheating chamber (5) provided with at least two burners (6) for maintaining a controlled temperature in said reheating chamber (5), said burners being constituted by regenerative burners (6)both serving the reheating chamber (5) and operating alternately by means of a fuel-air distribution unit (7) so that while one burner is activated the other burner aspirates gases from the reheating chamber (5), and in said reheating chamber (5) a scroll (14) being further provided for extracting and removing dust from said reheating chamber (5).

7. The apparatus according to claim 6, **characterized in that** said gas generation chamber and said reheating chamber are constituted by a same chamber (5).

8. The apparatus according to claims 6 and 7, **characterized in that** gas analyzer means (21) are arranged along said gas conveyance duct (3), at the output of said reheating chamber (5).

9. The apparatus according to one or more of the preceding claims 6-8, **characterized in that** it comprises means (22) for detecting the temperature in said reheating chamber (5).

10. The apparatus according to one or more of the preceding claims 6-9, **characterized in that** it comprises means (22) for detecting the temperature of the gases along said ducts (3,4).

11. The apparatus according to one or more of the preceding claims 6-10, **characterized in that** it comprises means (23) for detecting the flow-rate of the gases conveyed to said scrap container (2).

12. The apparatus according to one or more of the preceding claims 6-11, **characterized in that** it comprises means (15) for the circulation of said gases along the circuit constituted by said reheating chamber (5), by said conveyance duct (3), by said scrap container (2) and by said discharge duct (4).

13. The apparatus according to one or more of the preceding claims 6-12, **characterized in that** it comprises an electronic control and monitoring unit (24) whose input is connected to said temperature detection means (22), to said gas analysis means (21) and to said flow-rate detection means (23), said control and monitoring unit (24) controlling said regenerative burners (6) and said gas circulation means (15) in order to maintain a preset temperature in said reheating chamber (5) and ensure the retention of the gases in said reheating chamber (5) for a preset time.

## Patentansprüche

1. Verfahren zum Vorbereiten von Eisenschrott, der Elektroöfen zur Stahlherstellung zugeführt werden soll, umfassend die Schritte:
Erzeugen von Heißgasen in einer Kammer zur Gaserzeugung, getrennt von dem Rauchgasableitungssystem des Stahlwerksofens,
Fördern der Heißgase, so dass sie durch den dem Stahlwerksofen zuzuführenden Schrott strömen, um den Schrott vorzuwärmen,
Fördern der zum Vorwärmen des Schrotts verwendeten Gase in eine Wiederaufheizungskammer, die auf einer gesteuerten Temperatur von im Wesentlichen zwischen 1100 und 1200°C durch mindestens zwei Regenerativbrenner gehalten wird, die beide für die Wiederaufheizungskammer vorgesehen sind und mittels einer Brennstoff-Luft-Verteilungseinheit abwechselnd arbeiten, so dass, während ein Brenner aktiviert ist, der andere Brenner Gase aus der Wiederaufheizungskammer absaugt,
Halten der Gase in der genannten Wiederaufheizungskammer für eine vorgegebene Zeit von mindestens 1,5 Sekunden, ehe sie zurückgeführt werden, um den Schrott vorzuwärmen, oder in die Atmosphäre ausgestoßen werden, und
Extrahieren und Beseitigen von Staub aus der Wiederaufheizungskammer.

2. Verfahren nach Anspruch 1, **dadurch gekennzeichnet, dass** die Gaserzeugungskammer und die Wiederaufheizungskammer von ein und derselben Kammer gebildet sind.

3. Verfahren nach einem oder mehr der vorhergehenden Ansprüche, **dadurch gekennzeichnet, dass** der Schrott mittels der Gase auf eine Temperatur vorgewärmt wird, die im Wesentlichen zwischen 1000 und 1100°C liegt.

4. Verfahren nach einem oder mehr der vorhergehenden Ansprüche, **dadurch gekennzeichnet, dass** ein Bruchteil der in der Wiederaufheizungskammer enthaltenen Gase dazu verwendet wird, das Wärmespeichermaterial der Regenerativbrenner zu erwärmen, um die Brennluft vorzuwärmen, die den Regenerativbrennern zugeführt wird.

5. Verfahren nach einem oder mehr der vorhergehenden Ansprüche, **dadurch gekennzeichnet, dass** der vorzuwärmende Schrott in mindestens einem Korb angeordnet ist, durch den die genannten Gase strömen.

6. Vorrichtung zum Vorbereiten von Eisenschrott, der Elektroöfen zur Stahlherstellung zugeführt werden soll, wobei die Vorrichtung getrennt von der Vorrichtung zum Ableiten der Rauchgase des Stahlwerksofens angeordnet ist und eine Heißgas-Erzeugungskammer umfasst, die über einen Gasfördereinlasskanal (3) mit einem Behälter (2) für den dem Stahlwerksofen zuzuführenden Schrott verbunden ist, wobei der Behälter (2) wiederum über einen Gasauslasskanal (4) mit einer Wiederaufheizungskammer (5) verbunden ist, die mit mindestens zwei Brennern (6) versehen ist, um eine gesteuerte Temperatur in der Wiederaufheizungskammer (5) aufrechtzuerhalten, wobei die Brenner durch Regenerativbrenner (6) gebildet sind, die beide für die Wiederaufheizungskammer (5) vorgesehen sind und mittels einer Brennstoff-Luft-Verteilungseinheit (7) abwechselnd arbeiten, so dass, während ein Brenner aktiviert ist, der andere Brenner Gase aus der Wiederaufheizungskammer (5) absaugt, und wobei in der Wiederaufheizungskammer (5) ferner eine Förderschnecke (14) vorgesehen ist, um Staub aus der Wiederaufheizungskammer (5) zu extrahieren und zu beseitigen.

7. Vorrichtung nach Anspruch 6, **dadurch gekennzeichnet, dass** die Gaserzeugungskammer und die Wiederaufheizungskammer von ein und derselben Kammer (5) gebildet sind.

8. Vorrichtung nach den Ansprüchen 6 und 7, **dadurch gekennzeichnet, dass** Gasanalysemittel (21) entlang dem Gasförderkanal (3) angeordnet sind, am Ausgang der Wiederaufheizungskammer (5).

9. Vorrichtung nach einem oder mehr der vorhergehenden Ansprüche 6-8, **dadurch gekennzeichnet, dass** sie Mittel (22) zum Erfassen der Temperatur in der Wiederaufheizungskammer (5) umfasst.

10. Vorrichtung nach einem oder mehr der vorhergehenden Ansprüche 6-9, **dadurch gekennzeichnet, dass** sie Mittel (22) zum Erfassen der Temperatur der Gase entlang den Kanälen (3, 4) umfasst.

11. Vorrichtung nach einem oder mehr der vorhergehenden Ansprüche 6-10, **dadurch gekennzeichnet, dass** sie Mittel (23) zum Erfassen der Durchflussrate der zu dem Schrottbehälter (2) geförderten Gase umfasst.

12. Vorrichtung nach einem oder mehr der vorhergehenden Ansprüche 6-11, **dadurch gekennzeichnet, dass** sie Mittel (15) für die Zirkulation der Gase in dem Kreislauf umfasst, der aus der Wiederaufheizungskammer (5), dem Förderkanal (3), dem Schrottbehälter (2) und dem Auslasskanal (4) gebildet ist.

13. Vorrichtung nach einem oder mehr der vorhergehenden Ansprüche 6-12, **dadurch gekennzeichnet, dass** sie eine elektronische Steuer- und Überwachungseinheit (24) umfasst, deren Eingang mit den Temperaturerfassungsmitteln (22), den Gasanalysemitteln (21) und den Durchflussratenerfassungsmitteln (23) verbunden ist, wobei die Steuer- und Überwachungseinheit (24) die Regenerativbrenner (6) und die Gaszirkulationsmittel (15) steuert, um eine vorgegebene Temperatur in der Wiederaufheizungskammer (5) aufrechtzuerhalten und den Rückhalt der Gase in der Wiederaufheizungskammer (5) für eine vorgegebene Zeit zu gewährleisten.

## Revendications

1. Procédé de préparation de ferrailles avant de les transférer dans des fours électriques produisant de l'acier, comprenant les étapes de :
produire, séparément du système d'évacuation de gaz volatiles du four électrique produisant de l'acier, des gaz chauds à l'intérieur d'une chambre de génération de gaz ;
convoyer lesdits gaz chauds de telle sorte qu'ils se propagent au travers des ferrailles destinées à être transférées dans le four électrique produisant de l'acier, de façon à préchauffer les ferrailles ;
convoyer des gaz utilisés pour préchauffer les ferrailles vers l'intérieur d'une chambre de réchauffage qui est maintenue à une température commandée entre 1100 et 1200°C au moyen d'au moins deux brûleurs régénératifs chacun servant la chambre de réchauffage et fonctionnant en alternance au moyen d'une unité de distribution d'air et de carburant de sorte que pendant qu'un brûleur est activé l'autre brûleur aspire les gaz de la chambre de réchauffage ;
confiner lesdits gaz à l'intérieur de ladite chambre de réchauffage pendant une durée prédéterminée d'au moins 1,5 secondes avant qu'ils ne soient renvoyés pour préchauffer les ferrailles ou libérés dans l'atmosphère ;
et
extraire et retirer les poussières de ladite chambre de réchauffage.

2. Procédé selon la revendication 1, **caractérisé en ce que** ladite chambre de génération de gaz et ladite chambre de réchauffage sont formées par une même chambre.

3. Procédé selon l'une ou plusieurs des revendications précédentes, **caractérisé en ce que** les ferrailles sont préchauffées au moyen desdits gaz jusqu'à une température substantiellement comprise entre 1000 et 1100°C.

4. Procédé selon l'une ou plusieurs des revendications précédentes, **caractérisé en ce qu'**une fraction des gaz contenus à l'intérieur de ladite chambre de réchauffage est utilisée pour chauffer le matériau à accumulation thermique des brûleurs régénératifs pour préchauffer l'air comburant alimentant les brûleurs régénératifs.

5. Procédé selon l'une ou plusieurs des revendications précédentes, **caractérisé en ce que** les ferrailles à préchauffer sont disposées dans au moins un panier au travers duquel s'écoulent lesdits gaz.

6. Appareil pour préparer des ferrailles avant de les transférer dans des fours électriques produisant de l'acier, disposé séparément de l'appareil d'évacuation des gaz volatiles du four électrique produisant de l'acier, et comprenant une chambre de génération de gaz chauds qui est reliée, au moyen d'une conduite (3) d'admission de convoyage de gaz, à un récipient (2) pour les ferrailles devant être transférées dans le four électrique produisant de l'acier, ledit récipient (2) étant à son tour connecté au moyen d'une conduite d'évacuation de gaz (4) à une chambre de réchauffage (5) munie d'au moins deux brûleurs (6) pour maintenir une température commandée à l'intérieur de ladite chambre de réchauffage (5), lesdits brûleurs étant constitués par des brûleurs régénératifs (6) qui servent tous deux la chambre de réchauffage (5) et qui fonctionnent en alternance au moyen d'une unité de distribution d'air et de carburant (7) de telle sorte que pendant qu'un brûleur est activé l'autre aspire les gaz de la chambre de réchauffage (5), et on prévoit en outre à l'intérieur de ladite chambre de réchauffage (5) une hélice (14) pour extraire et retirer la poussière de ladite chambre de réchauffage (5).

7. Appareil selon la revendication 6, **caractérisé en ce que** ladite chambre de génération de gaz et ladite chambre de réchauffage sont formées par une même chambre (5).

8. Appareil selon les revendications 6 et 7, **caractérisé en ce que** des moyens d'analyse de gaz (21) sont disposés le long de ladite conduite de convoyage de gaz (3), à la sortie de ladite chambre de réchauffage (5).

9. Appareil selon l'une ou plusieurs des revendications précédentes 6-8, **caractérisé en ce qu'**il comprend des moyens (22) pour détecter la température à l'intérieur de ladite chambre de réchauffage (5).

10. Appareil selon l'une ou plusieurs des revendications précédentes 6-9, **caractérisé en ce qu'**il comprend des moyens (22) pour détecter la température des gaz le long desdites conduites (3, 4).

11. Appareil selon l'une ou plusieurs des revendications précédentes 6-10, **caractérisé en ce qu'**il comprend des moyens (23) pour détecter le débit des gaz convoyés vers ledit récipient pour ferrailles (2).

12. Appareil selon l'une ou plusieurs des revendications précédentes 6-11, **caractérisé en ce qu'**il comprend des moyens (15) pour la circulation desdits gaz le long du circuit constitué par ladite chambre de réchauffage (5), par ladite conduite de convoyage (3), par ledit récipient pour ferrailles (2) et par ladite conduite d'évacuation (4).

13. Appareil selon l'une ou plusieurs des revendications précédentes 6-12, **caractérisé en ce qu'**il comprend une unité électronique de commande et de suivi (24) dont l'entrée est reliée auxdits moyens de détection de température (22), auxdits moyens d'analyse de gaz (21) et auxdits moyens de détection de débit (23), ladite unité de commande et de suivi (24) pilotant lesdits brûleurs régénératifs (6) et lesdits moyens de circulation de gaz (15) de façon à maintenir une température prédéterminée à l'intérieur de ladite chambre de réchauffage (5) et assurer la retenue des gaz à l'intérieur de ladite chambre de réchauffage (5) pendant une durée prédéterminée.
